# EUROPÄISCHE PATENTSCHRIFT

(11) **EP 1 402 195 B1**
(45) Veröffentlichungstag und Bekanntmachung des Hinweises auf die Patenterteilung: **19.10.2005**
(21) Anmeldenummer: 02754266.1
(22) Anmeldetag: 25.06.2002
(51) Int. Cl.: F16F 9/05, B60G 15/14

(54) **LUFTFEDERANORDNUNG**
PNEUMATIC SPRING ASSEMBLY
SUSPENSION PNEUMATIQUE

(30) Priorität: 05.07.2001 DE 10132061
(43) Veröffentlichungstag der Anmeldung: 31.03.2004
(73) Patentinhaber: Carl Freudenberg KG, 69469 Weinheim (DE)
(72) Erfinder: DEHLWES, Stephan, 27432 Bremervörde (DE); LAU, Helmut, 79279 Müllheim/Niederweiler (DE)
(86) Internationale Anmeldenummer: PCT/DE2002/002316
(87) Internationale Veröffentlichungsnummer: WO 2003/004902

(56) Entgegenhaltungen:
- DE-C- 19 607 804
- US-A- 5 076 725
- US-A- 5 460 354
- US-A- 5 690 319
- US-B1- 6 398 198
- PATENT ABSTRACTS OF JAPAN vol. 1995, no. 10, 30. November 1995 (1995-11-30) & JP 07 167189 A (TOYOTA MOTOR CORP), 4. Juli 1995 (1995-07-04) in der Anmeldung erwähnt

## Beschreibung

Die Erfindung betrifft eine Luftfederanordnung, bestehend wenigstens aus:
- einem Druckbehälter mit Anbindung an das Chassis sowie aus einem Abrollkolben, wobei der Druckbehälter eine Druckkammer und eine zumeist topfförmige Aufnahmekammer aufweist, wobei wiederum in die Aufnahmekammer ein Dämpferlager, das einen Elastomerkörper und ein Tragstück umfasst, eingesetzt ist;
- einem Luftfederbalg aus elastomerem Werkstoff, der zumeist mit einem eingebetteten Festigkeitsträger versehen ist, wobei die beiden Balgenden am Druckbehälter einerseits und am Abrollkolben andererseits befestigt sind, wodurch der Luftfederbalg eine volumenelastische Luftkammer einschließt, wobei ferner der Luftfederbalg eine Schlaufe ausbildet, die an der Außenwand des Abrollkolbens entlang gleiten kann; sowie
- einem Stoßdämpfer, umfassend ein Behälterrohr, das zumindest abschnittsweise vom Abrollkolben umgeben ist, sowie eine Kolbenstange, die über eine Bodenöffnung der Aufnahmekammer fest mit dem Tragstück des Dämpferlagers verbunden ist und gleitend in das Behälterrohr eintaucht.

Eine solche luftfederanordnung ist aus der JP-A-07167189 bekannt.

Luftfederanordnungen dieser Art - auch Luftfederbeine genannt - werden vorwiegend in der Fahrzeugtechnik eingesetzt, vorzugsweise wiederum bei der Vorder- bzw. Hinterradaufhängung von Kraftfahrzeugen, wobei zum diesbezüglichen Stand der Technik insbesondere auf folgende Druckschriften verwiesen wird:
DE 100 50 028 A1
DE 196 07 804 C1
DE 196 45 228 A1
DE 198 26 480 A1
DE 199 07 672 C1
US 5 690 319
JP 07167189 A (Patent Abstracts of Japan)

Die Federbeine haben die Aufgabe, die Kräfte, die beim Überfahren einer Unebenheit der Fahrbahn entstehen, möglichst stark zu dämpfen. Die Einleitung der Schwingung in die Karosserie bzw. in das Chassis erfolgt über den Weg des Dämpferlagers, auch Federbeinstützlager genannt. Daher sollten alle Möglichkeiten der Leitung der Schwingung idealerweise durch einen Elastomerkörper unterbrochen werden. Dabei müssen die positiven Fahreigenschaften des Federbeines (z.B. Bodenhaftung) und Richtungsführung unbeeinträchtigt bleiben.

Nach dem Stand der Technik treten hinsichtlich des Dämpferlagers im Wesentlichen folgende zwei Konstellationen auf:
- Das Dämpferlager übernimmt zugleich die Abdichtung der Luftkammer, wobei beispielsweise die Druckschrift DE 198 26 480 A1 zitiert wird. Ein derartiges Dämpferlager ist jedoch hohen mechanischen Kräften wie auch den hohen Drücken, die innerhalb der Luftkammer herrschen, ausgesetzt, verbunden mit einem raschen Verschleiß.
- Das Dämpferlager übemimmt keine Funktion der Abdichtung. Die Abdichtung erfolgt über eine Druckplatte, die die Aufnahmekammer für das Dämpferlager kopfseitig abdichtet. Die Druckplatte ist dabei häufig als Ventilplatte ausgebildet, die für einen Druckaufbau sorgt. Diesbezüglich wird insbesondere auf die Druckschrift 5 690 319 verwiesen. Das Dämpferlager ist hier hohen Drücken ausgesetzt, ebenfalls verbunden mit einem raschen Verschleiß.

Im Rahmen einer Weiterentwicklung besteht die Aufgabe der Erfindung darin, eine Luftfederanordnung der gattungsgemäßen Art bereitzustellen, mit der eine erhöhte Dämpfung der Kräfte, die auf das Chassis wirken, erreicht wird, und zwar unter dem Gesichtspunkt einstellbarer Druckverhältnisse, die bis zu 100 bar betragen können. Dabei soll das Dämpferlager druckentlastet sein, und zwar im Sinne einer deutlichen Druckreduzierung.

Gelöst wird diese Aufgabe gemäß Kennzeichen des Patentanspruches 1 dadurch, dass der Druckbehälter im Bereich der Bodenöffnung der Aufnahmekammer mit einer dynamischen Dichtung versehen ist, die die Druckkammer und somit auch die volumenelastische Luftkammer abdichtet, und zwar unter gleichzeitiger Anpassung an die Amplituden und Bewegungen der Kolbenstange.

Zweckmäßige Ausgestaltungen der Erfindung sind in den Patentansprüchen 2 bis 28 genannt.

Die Erfindung wird nun anhand von Ausführungsbeispielen unter Bezugnahme auf schematische Zeichnungen erläutert. Es zeigen:
- Fig. 1: einen Druckbehälter mit dynamischer Dichtung, wobei das Dämpferlager ausschließlich dem Atmosphärendruck ausgesetzt ist;
- Fig. 2: einen Druckbehälter mit dynamischer Dichtung gemäß Fig. 1 mit zusätzlicher statischer Dichtung;
- Fig. 3: eine dynamische Dichtung in Form einer Rollmembran.

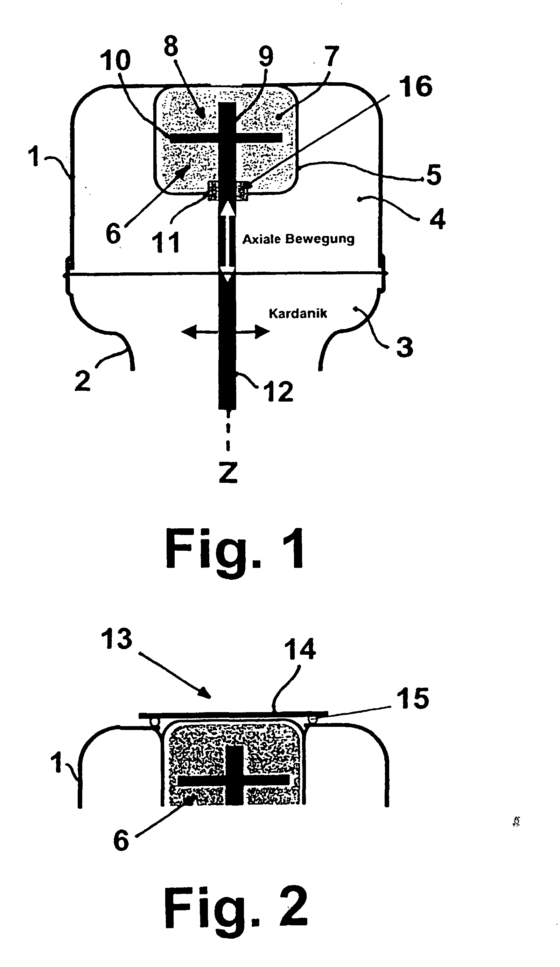

Nach Fig. 1 ist an den Druckbehälter **1** das eine Balgende des Luftfederbalges **2** aus elastomerem Werkstoff, der zumeist mit einem eingebetteten Festigkeitsträger versehen ist, befestigt, beispielsweise mittels eines Klemmringes. Das andere Balgende (hier nicht eingezeichnet) steht mit dem Abrollkolben in Verbindung, wodurch der Luftfederbalg eine volumenelastische Luftkammer **3** einschließt. Hinsichtlich des Zusammenwirkens von Luftfederbalg und Abrollkolben wird auf den eingangs zitierten Stand der Technik verwiesen.

Der Druckbehälter **1** umfasst eine Druckkammer **4,** die mit der Luftkammer **3** ein gemeinsames Drucksystem bildet, und eine Aufnahmekammer **5,** die innerhalb des Kernbereiches des Druckbehälters topfförmig in die Druckkammer eintaucht. Ferner kann die Druckkammer mit einem Ventil versehen sein (DE 198 19 642 A1).

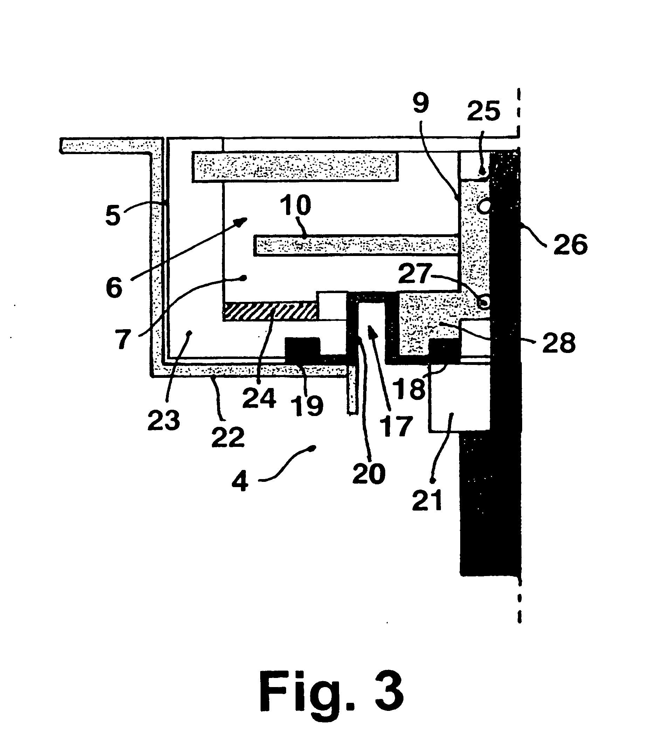

In die Aufnahmekammer **5** wird nun das Dämpferlager **6** eingesetzt, das herstellungsbedingt ein getrenntes Bauteil ist. Das Dämpferlager besteht aus einem Elastomerkörper **7** und einem Tragstück **8,** das wiederum einen zentralen Stützkörper **9** und eine senkrecht zum Stützkörper angeordnete Tragscheibe **10** umfasst. Das Tragstück ist dabei mit dem Elastomerkörper festhaftend verbunden. Der zentrale Stützkörper, der innerhalb des Mittelpunktbereiches der Tragscheibe verläuft, ist über die Bodenöffnung **11** der Aufnahmekammer mit der Kolbenstange **12** des Stoßdämpfers verbunden. In diesem Zusammenhang weist der Kernbereich des zentralen Stützkörpers **9** insbesondere ein axial verlaufendes Innenrohr für die Aufnahme der Kolbenstange auf, wobei diesbezüglich auf die Fig. 3 und korrespondierende Beschreibung verwiesen wird.

Der Elastomerkörper **7** des Dämpferlagers **6** ist ein ungeschäumter Werkstoff, vorzugsweise auf Basis von Naturkautschuk. Auch ein geschäumter mikrozellulärer Werkstoff kann verwendet werden, insbesondere auf Basis von Polyurethankautschuk, vorzugsweise wiederum auf Polyester-Polyurethan-Basis. Auch die Kombination eines ungeschäumten Werkstoffes mit einem geschäumten Material ist anwendbar.

Die hier näher vorgestellten konstruktiven wie auch werkstoffspezifischen Maßnahmen tragen zusätzlich zu einer erhöhten Lebensdauer des Dämpterlagers bei.

Der Druckbehälter **1** ist im Bereich der Bodenöffnung **11** der Aufnahmekammer **5** mit einer dynamischen Dichtung **16** aus polymerem Werkstoff versehen, die sich der axialen Bewegung in Z-Richtung und der Kardanik anpasst, wobei aufgrund der unten aufgeführten Bedingungen sehr hohe Anforderungen an eine derartige Dichtung gestellt werden, und zwar:
- Amplituden der Kolbenstange von etwa +/- 10 mm in Z-Richtung;
- Bewegung der Kolbenstange von etwa +/- 2 mm in der Ebene senkrecht zur Z-Richtung;
- Kardanische Bewegung der Kolbenstange von bis zu etwa +/- 8°;
- zusätzlich hohe Impulslasten;
- mögliche länger anhaltende Mikroschwingungen;
- keine Erhöhung der Steifigkeit des Dämpferlagers.

Vorteilhafterweise ist in diesem Zusammenhang die dynamische Dichtung **16** in der Nähe des kardarnischen Punktes des Dämpferlagers **6** angeordnet.

Da die Dichtung **16** die Bodenöffnung **11** der Aufnahmekammer **5** abdichtet, befindet sich hier das Dämpferlager **6** außerhalb des Druckbereiches. Das Dämpferlager ist also nur dem äußeren Atmosphärendruck ausgesetzt, verbunden mit einer hohen Lebensdauer. Darüber hinaus ist ein Austausch des Dämpferlagers **6** bei Bedarf möglich.

Nach einer Variante gemäß Fig. 2 kann der Druckbehälter 1 zusätzlich mit einer statischen Dichtung **13** versehen sein, die den Kopfbereich der Aufnahmekammer abdichtet und dabei bei Ausfall der dynamischen Dichtung als Notdichtung wirkt. Die Dichtung **13** umfasst eine Dichtplatte **14** aus Metall oder einem entsprechenden Kunststoff (z.B. glasfaserverstärktem Kunststoff) sowie einen Dichtring **15** aus polymerem Werkstoff, vorzugsweise auf der Basis eines Elastomeren oder thermoplastischen Elastomeren. In Verbindung mit entsprechenden Befestigungsmitteln, beispielsweise durch Verschraubung mit dem Druckbehälter oder mit dem zentralen Stützkörper bzw. mit der Kolbenstange, wird für einen dichten Abschluss gesorgt. Darüber hinaus ist auch hier ein Austausch des Dämpferlagers 6 bei Bedarf möglich.

Die Dichtung **13** kann anstelle der Dichtplatte **14** und des Dichtringes **15** eine aushärtbare Dichtmasse umfassen, die die Aufnahmekammer dauerhaft verschließt.

Mit diesem Kombinationssystem ist jedoch das gekammerte Dämpferlager **6** im Vergleich zum Ausführungsbeispiel gemäß Fig. 1 einem etwas erhöhten Druck ausgesetzt. Im Gegensatz zu dem Luftfederbein gemäß US 5 690 319 ist bedingt durch das neue Dichtkonzept jedoch auch hier eine deutliche Druckreduzierung gegeben.

Fig. 3 zeigt nun eine besonders vorteilhafte Ausführung der dynamischen Dichtung in Form einer Rollmembran **17,** die folgende Membranbereiche umfasst:
- ein erstes Membranende **18,** das der Kolbenstange **12** des Stoßdämpfers zugewandt ist;
- ein zweites Membranende **19,** das der Kolbenstange **12** abgewandt ist; sowie
- einen sich zwischen den beiden Membranenden erstreckenden Rollbereich **20.**

Die Rollmembran **17** auf der Basis eines Elastomeren oder thermoplastischen Elastomeren weist vorzugsweise einen eingebetteten Festigkeitsträger auf, der ein Gewebe mit gekreuzt verlaufenden Fadenverstärkungen ist oder aus axial verlaufenden Fadenverstärkungen besteht. Als Material wird insbesondere Polyester, Polyamid oder Polyimid verwendet.

Die beiden Membranenden **18** und **19,** die aufgedickt sind, werden mittels Halte- und Anpressteile fixiert. So ist das erste Membranende **18** zwischen einem verbreiterten Fundament **28** des Tragstückes **8** bzw. des zentralen Stützkörpers **9** des Dämpferlagers und einem zusätzlichen Bodenkörper **21** eingespannt. Das zweite Membranende **19** ist zwischen dem Boden **22** der Aufnahmekammer **5** und einem aufsitzenden Halte- und Anpressteil **23** eingespannt. Femer ist zwischen diesem Halte- und Anpressteil und dem Elastomerkörper **7** des Dämpferlagers ein Distanzstück **24** angeordnet.

Die Rollmembran **17** dichtet in der hier beschriebenen Weise die Druckkammer **4** gegenüber der Aufnahmekammer **5** wirksam ab, und dies unter Erfüllung des oben genannten Anforderungsprofiles. Ferner kann sie gegebenenfalls ausgetauscht werden.

Der Kernbereich des zentralen Stützkörpers **9** des Tragstückes umfasst ein axial verlaufendes Innenrohr für die Aufnahme der Kolbenstange **12** des Stoßdämpfers, und zwar in Verbindung mit einer Schraubenbefestigung **25.** Zwischen der Kolbenstange **12** und der Innenrohrwand **26** sind zusätzlich zwei Dichtringe **27** aus polymerem Werkstoff, vorzugsweise wiederum auf der Basis eines Elastomeren oder thermoplastischen Elastomeren, angeordnet.

Nach einer weiteren vorteilhaften Ausgestaltung der Erfindung ist die Luftkammer **3** bzw. Druckkammer **4** teilweise oder vollständig mit einem inerten Gas oder einer inerten Gasmischung gefüllt, vorzugsweise auf der Basis von Stickstoff und/oder Kohlendioxid und/oder eines Edelgases. Dadurch wird die Lebensdauer der dynamischen Dichtung erhöht, da der reaktionsfähige Sauerstoff der Luft wegen seiner oxidativen Wirkung die Werkstoffe der Dichtungen angreifen kann.

Der hier verwendete Begriff "Luft" im Rahmen der allgemein gebräuchlichen Bezeichnungen, wie Luftfederanordnung, Luftfederbein, Luftfederbalg und Luftkammer, umfasst dabei auch Gase bzw. Gasmischungen, die von der üblichen Luftzusammensetzung abweichen.

### Bezugszeichenliste

- **1**: Druckbehälter
- **2**: Luftfederbalg
- **3**: volumenelastische Luftkammer
- **4**: Druckkammer
- **5**: Aufnahmekammer
- **6**: Dämpferlager
- **7**: Elastomerkörper
- **8**: Tragstück
- **9**: zentraler Stützkörper
- **10**: Tragscheibe
- **11**: Bodenöffnung der Aufnahmekammer
- **12**: Kolbenstange des Stoßdämpfers
- **13**: statische Dichtung
- **14**: Dichtplatte
- **15**: Dichtring
- **16**: dynamische Dichtung
- **17**: Rollmembran
- **18**: erstes Membranende
- **19**: zweites Membranende
- **20**: Rollbereich
- **21**: zusätzlicher Bodenkörper
- **22**: Boden der Aufnahmekammer
- **23**: Halte- und Anpressteil
- **24**: Distanzstück
- **25**: Schraubenbefestigung
- **26**: Innenrohrwand
- **27**: Dichtring
- **28**: verbreitertes Fundament des Tragstückes bzw. Stützköpers

## Patentansprüche

1. Luftfederanordnung, bestehend wenigstens aus:
- einem Druckbehälter (1) mit Anbindung an das Chassis sowie aus einem Abrollkolben, wobei der Druckbehälter eine Druckkammer (4) und eine zumeist topfförmige Aufnahmekammer (5) aufweist, wobei wiederum in die Aufnahmekammer ein Dämpferlager (6), das einen Elastomerkörper (7) und ein Tragstück (8) umfasst, eingesetzt ist;
- einem Luftfederbalg (2) aus elastomerem Werkstoff, der zumeist mit einem eingebetteten Festigkeitsträger versehen ist, wobei die beiden Balgenden am Druckbehälter (1) einerseits und am Abrollkolben andererseits befestigt sind, wodurch der Luftfederbalg eine volumenelastische Luftkammer (3) einschließt, wobei ferner der Luftfederbalg eine Schlaufe ausbildet, die an der Außenwand des Abrollkolbens entlang gleiten kann; sowie
- einem Stoßdämpfer, umfassend ein Behälterrohr, das zumindest abschnittsweise vom Abrollkolben umgeben ist, sowie eine Kolbenstange (12), die über eine Bodenöffnung (11) der Aufnahmekammer (5) fest mit dem Tragstück (8) des Dämpferlagers (6) verbunden ist und gleitend in das Behälterrohr eintaucht;
**dadurch gekennzeichnet, dass**
- der Druckbehälter (1) im Bereich der Bodenöffnung (11) der Aufnahmekammer (5) mit einer dynamischen Dichtung (16, 17) versehen ist, die die Druckkammer (4) und somit auch die volumenelastische Luftkammer (3) abdichtet, und zwar unter gleichzeitiger Anpassung an die Amplituden und Bewegungen der Kolbenstange (12).

2. Luftfederanordnung nach Anspruch 1, **dadurch gekennzeichnet, dass** die dynamische Dichtung (16, 17) so eingebaut ist, dass diese ausgetauscht werden kann.

3. Luftfederanordnung nach Anspruch 1 oder 2, **dadurch gekennzeichnet, dass** die dynamische Dichtung (16, 17) aus einem polymeren Werkstoff besteht, vorzugsweise auf der Basis eines Elastomeren oder thermoplastischen Elastomeren.

4. Luftfederanordnung nach Anspruch 3, **dadurch gekennzeichnet, dass** die dynamische Dichtung als Rollmembran (17) ausgebildet ist, und zwar umfassend folgende Membranbereiche:
- ein erstes Membranende (18), das der Kolbenstange (12) des Stoßdämpfers zugewandt ist;
- ein zweites Membranende (19), das der Kolbenstange (12) abgewandt ist; sowie
- einen sich zwischen den beiden Membranenden (18, 19) erstreckenden Rollbereich (20).

5. Luftfederanordnung nach Anspruch 4, **dadurch gekennzeichnet, dass** die Rollmembran (17) einen eingebetteten Festigkeitsträger aufweist.

6. Luftfederanordnung nach Anspruch 5, **dadurch gekennzeichnet, dass** der Festigkeitsträger ein Gewebe mit gekreuzt verlaufenden Fadenverstärkungen ist.

7. Luftfederanordnung nach Anspruch 5, **dadurch gekennzeichnet, dass** der Festigkeitsträger aus axial verlaufenden Fadenverstärkungen besteht.

8. Luftfederanordnung nach einem der Ansprüche 5 bis 7, **dadurch gekennzeichnet, dass** der Festigkeitsträger aus Polyester, Polyamid oder Polyimid besteht.

9. Luftfederanordnung nach einem der Ansprüche 4 bis 8, **dadurch gekennzeichnet, dass** die beiden Membranender (18, 19) aufgedickt sind.

10. Luftfederanordnung nach einem der Ansprüche 4 bis 9, **dadurch gekennzeichnet, dass** die beiden Membranenden (18, 19) mittels Halte- und Anpressteile fixiert sind.

11. Luftfederanordnung nach Anspruch 10, **dadurch gekennzeichnet, dass** das erste Membranende (18) zwischen einem verbreiterten Fundament (28) des Tragstückes (8) und einem zusätzlichen Bodenkörper (21) eingespannt ist.

12. Luftfederanordnung nach Anspruch 10 oder 11, **dadurch gekennzeichnet, dass** das zweite Membranende (19) zwischen dem Boden (22) der Aufnahmekammer (5) und einem aufsitzenden Halte- und Anpressteil (23) eingespannt ist.

13. Luftfederanordnung nach Anspruch 12, **dadurch gekennzeichnet, dass** zwischen dem Halte- und Anpressteil (23) für das zweite Membranende (19) und dem Elastomerkörper (7) des Dämpferlagers (6) ein Distanzstück (24) angeordnet ist.

14. Luftfederanordnung nach einem der Ansprüche 1 bis 13, **dadurch gekennzeichnet, dass** die dynamische Dichtung (16, 17) in der Nähe des kardanischen Punktes des Dämpferlagers (6) angeordnet ist.

15. Luftfederanordnung nach einem der Ansprüche 1 bis 14, **dadurch gekennzeichnet, dass** der Elastomerkörper (7) des Dämpferlagers (6) ein ungeschäumter Werkstoff ist, vorzugsweise auf Basis von Naturkautschuk.

16. Luftfederanordnung nach einem der Ansprüche 1 bis 14, **dadurch gekennzeichnet, dass** der Elastomerkörper (7) des Dämpferlagers (6) ein geschäumter Werkstoff ist, insbesondere auf mikrozellulärer Basis, vorzugsweise auf Basis von Polyurethankautschuk, vorzugsweise wiederum auf Polyester-Polyurethan-Basis.

17. Luftfederanordnung nach Anspruch 15 und 16, **gekennzeichnet durch** die Kombination eines ungeschäumten Werkstoffes mit einem geschäumten Werkstoff.

18. Luftfederanordnung nach einem der Ansprüche 1 bis 17, **dadurch gekennzeichnet, dass** das Tragstück (8) einen zentralen Stützkörper (9), der mit der Kolbenstange (12) des Stoßdämpfers verbunden ist, sowie wenigstens eine senkrecht zum Stützkörper angeordnete Tragscheibe (10) umfasst, wobei der Stützkörper innerhalb des Mittelpunktbereiches der Tragscheibe verläuft.

19. Luftfederanordnung nach einem der Ansprüche 1 bis 18, **dadurch gekennzeichnet, dass** das Tragstück (8) mit dem Elastomerkörper (7) festhaftend verbunden ist.

20. Luftfederanordnung nach einem der Ansprüche 1 bis 19, **dadurch gekennzeichnet, dass** das Dämpferlager (6) ausschließlich dem äußeren Atmosphärendruck ausgesetzt ist.

21. Luftfederanordnung nach einem der Ansprüche 1 bis 19, **dadurch gekennzeichnet, dass** im Kopfbereich der Aufnahmekammer (5) zusätzlich eine statische Dichtung angeordnet ist.

22. Luftfederanordnung nach Anspruch 21, **dadurch gekennzeichnet, dass** die statische Dichtung (13) eine Dichtplatte (14) umfasst.

23. Luftfederanordnung nach Anspruch 22, **dadurch gekennzeichnet, dass** die Dichtplatte (14) zusätzlich mit einem Dichtring (15) aus polymerem Werkstoff, vorzugsweise auf der Basis eines Elastomeren oder thermoplastischen Elastomeren, versehen ist.

24. Luftfederanordnung nach Anspruch 22, **dadurch gekennzeichnet, dass** die statische Dichtung eine aushärtbare Dichtmasse umfasst, die die Aufnahmekammer (5) dauerhaft verschließt.

25. Luftfederanordnung nach einem der Ansprüche 1 bis 24, **dadurch gekennzeichnet, dass** der Kernbereich des Tragstückes (8) bzw. des zentralen Stützkörpers (9) ein axial verlaufendes Innenrohr für die Aufnahme der Kolbenstange (12) des Stoßdämpfers umfasst, insbesondere in Verbindung mit einer Schraubenbefestigung (25).

26. Luftfederanordnung nach Anspruch 25, **dadurch gekennzeichnet, dass** zwischen der Kolbenstange (12) und der Innenrohrwand (26) des Tragstückes (8) bzw. zentralen Stützkörpers (9) wenigstens ein Dichtring (27) aus polymerem Werkstoff, vorzugsweise auf der Basis eines Elastomeren oder thermoplastischen Elastomeren, angeordnet ist.

27. Luftfederanordnung nach einem der Ansprüche 1 bis 26, **dadurch gekennzeichnet, dass** die Druckkammer (4) bzw. Luftkammer (3) teilweise oder vollständig mit einem inerten Gas oder einer inerten Gasmischung gefüllt ist.

28. Luftfederanordnung nach Anspruch 27, **dadurch gekennzeichnet, dass** ein Gas oder eine Gasmischung aus Stickstoff und/oder Kohlendioxid und/oder einem Edelgas verwendet wird.

## Claims

1. Pneumatic spring assembly, comprising at least:
- a pressure reservoir (1) with attachment to the chassis, and a rolling piston, the pressure reservoir having a pressure chamber (4) and a normally pot-like accommodating chamber (5), a shock-absorber bearing (6), which comprises an elastomer body (7) and a supporting piece (8), in turn being inserted into the accommodating chamber;
- a pneumatic spring bellows (2) of elastomeric material, which is normally provided with an embedded strength support, the two bellows ends being fixed to the pressure reservoir (1) at one end and to the rolling piston at the other end, as a result of which the pneumatic spring bellows encloses a volume-elastic air chamber (3), the pneumatic spring bellows also forming a loop which can slide along on the outer wall of the rolling piston; and
- a shock absorber, comprising a container tube which, at least in some sections, is surrounded by the rolling piston, and a piston rod (12), which is firmly connected via a bottom opening (11) of the accommodating chamber (5) to the supporting piece (8) of the shock-absorber bearing (6) and penetrates into the container tube in a sliding manner;
**characterized in that**
- the pressure reservoir (1) is provided, in the region of the bottom opening (11) of the accommodating chamber (5), with a dynamic seal (16, 17) which seals off the pressure chamber (4) and therefore also the volume-elastic air chamber (3), specifically whilst simultaneously adapting to the amplitudes and movements of the piston rod (12).

2. Pneumatic spring assembly according to Claim 1, **characterized in that** the dynamic seal (16, 17) is installed in such a way that it can be replaced.

3. Pneumatic spring assembly according to Claim 1 or 2, **characterized in that** the dynamic seal (16, 17) consists of a polymer material, preferably based on an elastomer or thermoplastic elastomer.

4. Pneumatic spring assembly according to Claim 3, **characterized in that** the dynamic seal is designed as a rolling diaphragm (17), specifically comprising the following diaphragm areas:
- a first diaphragm end (18), which faces the piston rod (12) of the shock absorber;
- a second diaphragm end (19), which faces away from the piston rod (12); and
- a rolling area (20) extending between the two diaphragm ends (18, 19).

5. Pneumatic spring assembly according to Claim 4, **characterized in that** the rolling diaphragm (17) has an embedded strength support.

6. Pneumatic spring assembly according to Claim 5, **characterized in that** the strength support is a fabric with thread reinforcements running in a crossed manner.

7. Pneumatic spring assembly according to Claim 5, **characterized in that** the strength support consists of thread reinforcements running axially.

8. Pneumatic spring assembly according to one of Claims 5 to 7, **characterized in that** the strength support consists of polyester, polyamide or polyimide.

9. Pneumatic spring assembly according to one of Claims 4 to 8, **characterized in that** the two diaphragm ends (18, 19) are thickened.

10. Pneumatic spring assembly according to one of Claims 4 to 9, **characterized in that** the two diaphragm ends (18, 19) are fixed by means of retaining and pressing parts.

11. Pneumatic spring assembly according to Claim 10, **characterized in that** the first diaphragm end (18) is clamped in between a broadened foundation (28) of the supporting piece (8) and an additional bottom element (21).

12. Pneumatic spring assembly according to Claim 10 or 11, **characterized in that** the second diaphragm end (19) is clamped in between the bottom (22) of the accommodating chamber (5) and a retaining and pressing part (23) seated thereon.

13. Pneumatic spring assembly according to Claim 12, **characterized in that** a spacer (24) is arranged between the retaining and pressing part (23) for the second diaphragm end (19) and the elastomer body (7) of the shock-absorber bearing (6).

14. Pneumatic spring assembly according to one of Claims 1 to 13, **characterized in that** the dynamic seal (16, 17) is arranged in the vicinity of the cardanic point of the shock-absorber bearing (6).

15. Pneumatic spring assembly according to one of Claims 1 to 14, **characterized in that** the elastomer body (7) of the shock-absorber bearing (6) is an unfoamed material, preferably based on natural rubber.

16. Pneumatic spring assembly according to one of Claims 1 to 14, **characterized in that** the elastomer body (7) of the shock-absorber bearing (6) is a foamed material, in particular on a microcellular basis, preferably based on polyurethane rubber, preferably in turn based on polyester polyurethane.

17. Pneumatic spring assembly according to Claims 15 and 16, **characterized by** the combination of an unfoamed material with a foamed material.

18. Pneumatic spring assembly according to one of Claims 1 to 17, **characterized in that** the supporting piece (8) comprises a central supporting element (9), which is connected to the piston rod (12) of the shock absorber, and at least one load-bearing disc (10) arranged at right angles to the supporting element, the supporting element running within the region of the centre of the load-bearing disc.

19. Pneumatic spring assembly according to one of Claims 1 to 18, **characterized in that** the supporting piece (8) is connected to the elastomer body (7) in a firmly adhering manner.

20. Pneumatic spring assembly according to one of Claims 1 to 19, **characterized in that** the shock-absorber bearing (6) is subjected only to external atmospheric pressure.

21. Pneumatic spring assembly according to one of Claims 1 to 19, **characterized in that** a static seal is additionally arranged in the top area of the accommodating chamber (5).

22. Pneumatic spring assembly according to Claim 21, **characterized in that** the static seal (13) comprises a sealing plate (14).

23. Pneumatic spring assembly according to Claim 22, **characterized in that** the sealing plate (14) is additionally provided with a sealing ring (15) of polymer material, preferably based on an elastomer or thermoplastic elastomer.

24. Pneumatic spring assembly according to Claim 22, **characterized in that** the static seal comprises a curable sealing compound which closes the accommodating chamber (5) permanently.

25. Pneumatic spring assembly according to one of Claims 1 to 24, **characterized in that** the core area of the supporting piece (8) or of the central supporting element (9) comprises an inner tube running axially to accommodate the piston rod (12) of the shock absorber, in particular in conjunction with a screw fixing (25).

26. Pneumatic spring assembly according to Claim 25, **characterized in that** at least one sealing ring (27) of polymer material, preferably based on an elastomer or thermoplastic elastomer, is arranged between the piston rod (12) and the inner tube wall (26) of the supporting piece (8) or central supporting element (9).

27. Pneumatic spring assembly according to one of Claims 1 to 26, **characterized in that** the pressure chamber (4) or air chamber (3) is partly or completely filled with an inert gas or an inert gas mixture.

28. Pneumatic spring assembly according to Claim 27, **characterized in that** use is made of a gas or a gas mixture of nitrogen and/or carbon dioxide and/or a noble gas.

## Revendications

1. Suspension pneumatique constituée au moins
- d'un réservoir sous pression (1) avec connexion au châssis ainsi que d'un piston roulant, le réservoir sous pression présentant une chambre sous pression (4) et une chambre de réception (5) le plus souvent en forme de pot, un palier amortisseur (6), qui comprend un corps élastomère (7) et une pièce porteuse (8), étant placé d'autre part dans la chambre de réception,
- d'un soufflet (2) pneumatique faisant ressort, en matériau élastomère, qui est pourvu le plus souvent d'un support de résistance intégré, les deux extrémités du soufflet étant fixées d'une part au réservoir sous pression (1) et d'autre part au piston roulant, à la suite de quoi le soufflet pneumatique faisant ressort enferme une chambre à air (3) au volume élastique, le soufflet pneumatique faisant ressort formant en outre une boucle qui peut glisser le long de la paroi extérieure du piston roulant, ainsi que
- d'un amortisseur de choc comprenant un tube conteneur qui est entouré au moins dans certaines sections par le piston roulant ainsi que d'une tige (12) de piston qui est fermement reliée par une ouverture de fond (11) de la chambre de réception (5) à la pièce porteuse (8) du palier amortisseur (6) et plonge en glissant dans le tube conteneur,
**caractérisée en ce que** :
- le réservoir sous pression (1) est pourvu dans la région de l'ouverture de fond (11) de la chambre de réception (5) d'une étanchéité dynamique (16, 17) qui ferme de manière étanche la chambre sous pression (4) et donc aussi la chambre à air (3) au volume élastique et, en fait, en s'adaptant en même temps aux amplitudes et aux mouvements de la tige (12) de piston.

2. Suspension pneumatique selon la revendication 1, **caractérisée en ce que** l'étanchéité dynamique (16, 17) est montée de manière telle que celle-ci puisse être remplacée.

3. Suspension pneumatique selon la revendication 1 ou 2, **caractérisée en ce que** l'étanchéité dynamique (16, 17) est constituée d'un matériau polymère, de préférence à base d'un élastomère ou d'un élastomère thermoplastique.

4. Suspension pneumatique selon la revendication 3, **caractérisée en ce que** l'étanchéité dynamique est configurée comme une membrane roulante (17) et, en fait, comprenant les régions de membrane suivantes :
- une première extrémité (18) de membrane qui est orientée vers la tige (12) de piston de l'amortisseur de choc,
- une deuxième extrémité (19) de membrane qui est opposée à la tige (12) de piston ainsi que
- une région roulante (20) s'étendant entre les deux extrémités (18, 19) de membrane.

5. Suspension pneumatique selon la revendication 4, **caractérisée en ce que** la membrane roulante (17) présente un support de résistance intégré.

6. Suspension pneumatique selon la revendication 5, **caractérisée en ce que** le support de résistance est un tissu avec des renforcements en fil courant de manière croisée.

7. Suspension pneumatique selon la revendication 5, **caractérisée en ce que** le support de résistance est constitué de renforcements en fil courant de manière axiale.

8. Suspension pneumatique selon une des revendications 5 à 7, **caractérisée en ce que** le support de résistance est constitué de polyester, de polyamide ou de polyimide.

9. Suspension pneumatique selon une des revendications 4 à 8, **caractérisée en ce que** les deux extrémités (18, 19) de membrane sont épaissies.

10. Suspension pneumatique selon une des revendications 4 à 9, **caractérisée en ce que** les deux extrémités (18, 19) de membrane sont fixées au moyen de pièces de retenue et de compression.

11. Suspension pneumatique selon la revendication 10, **caractérisée en ce que** la première extrémité (18) de membrane est serrée entre une fondation élargie (28) de la pièce porteuse (8) et un corps de fond (21) supplémentaire.

12. Suspension pneumatique selon la revendication 10 ou 11, **caractérisée en ce que** la deuxième extrémité (19) de membrane est serrée entre le fond (22) de la chambre de réception (5) et une partie de retenue et de compression (23) se trouvant dessus.

13. Suspension pneumatique selon la revendication 12, **caractérisée en ce qu'**une pièce d'écartement (24) est disposée entre la pièce de retenue et de compression (23) pour la deuxième extrémité (19) de membrane et le corps élastomère (7) du palier amortisseur (6).

14. Suspension pneumatique selon une des revendications 1 à 13, **caractérisée en ce que** l'étanchéité dynamique (16, 17) est disposée à proximité du point à la Cardan du palier amortisseur (6).

15. Suspension pneumatique selon une des revendications 1 à 14, **caractérisée en ce que** le corps élastomère (7) du palier amortisseur (6) est un matériau non expansé, de préférence à base de caoutchouc naturel.

16. Suspension pneumatique selon une des revendications 1 à 14, **caractérisée en ce que** le corps élastomère (7) du palier amortisseur (6) est un matériau expansé, en particulier à base microcellulaire, de préférence à base de caoutchouc de polyuréthanne, de préférence de nouveau à base de polyester-polyuréthanne.

17. Suspension pneumatique selon la revendication 15 ou 16, **caractérisée par** la combinaison d'un matériau non expansé avec un matériau expansé.

18. Suspension pneumatique selon une des revendications 1 à 17, **caractérisée en ce que** la pièce porteuse (8) comprend un corps de support central (9) qui est relié à la tige (12) de piston de l'amortisseur de choc, ainsi qu'au moins un disque porteur (10) disposé perpendiculairement par rapport au corps de support, le corps de support courant dans la région du centre du disque porteur.

19. Suspension pneumatique selon une des revendications 1 à 18, **caractérisée en ce que** la pièce porteuse (8) est reliée de manière fermement adhérente au corps élastomère (7).

20. Suspension pneumatique selon une des revendications 1 à 19, **caractérisée en ce que** le palier amortisseur (6) est exclusivement exposé à la pression atmosphérique extérieure.

21. Suspension pneumatique selon une des revendications 1 à 19, **caractérisée en ce qu'**en plus, une étanchéité statique est disposée dans la région supérieure de la chambre de réception (5).

22. Suspension pneumatique selon la revendication 21, **caractérisée en ce que** l'étanchéité statique (13) comprend une plaque d'étanchéité (14).

23. Suspension pneumatique selon la revendication 22, **caractérisée en ce que** la plaque d'étanchéité (14) est pourvue en plus d'une bague d'étanchéité (15) en matériau polymère, de préférence à base d'un élastomère ou d'un élastomère thermoplastique.

24. Suspension pneumatique selon la revendication 22, **caractérisée en ce que** l'étanchéité statique comprend une masse d'étanchéité durcissable qui ferme de manière permanente la chambre de réception (5).

25. Suspension pneumatique selon une des revendications 1 à 24, **caractérisée en ce que** la région du coeur de la pièce porteuse (8) ou encore du corps de support central (9) comprend un tube intérieur s'étendant axialement pour le logement de la tige (12) de piston de l'amortisseur de choc, en particulier en liaison avec une fixation à vis (25)

26. Suspension pneumatique selon la revendication 25, **caractérisée en ce qu'**au moins une bague d'étanchéité (27) en matériau polymère, de préférence à base d'un élastomère ou d'un élastomère thermoplastique, est disposée entre la tige (12) de piston et la paroi (26) du tube intérieur de la pièce porteuse (8) ou encore du corps de support central (9).

27. Suspension pneumatique selon une des revendications 1 à 26, **caractérisée en ce que** la chambre sous pression (4) ou encore la chambre à air (3) est remplie en partie ou en totalité d'un gaz inerte ou d'un mélange de gaz inertes.

28. Suspension pneumatique selon la revendication 27, **caractérisée en ce qu'**un gaz ou un mélange de gaz composé d'azote et / ou de dioxyde de carbone et / ou d'un gaz rare est utilisé.
